(19) Europäisches Patentamt / European Patent Office / Office européen des brevets

(11) **EP 1 492 054 B1**

(12) **EUROPEAN PATENT SPECIFICATION**

(45) Date of publication and mention
of the grant of the patent:
**31.07.2019 Bulletin 2019/31**

(51) Int Cl.:
**G06T 7/00** *(2017.01)*          **G06T 15/04** *(2011.01)*
**G06T 7/564** *(2017.01)*

(21) Application number: **03013444.9**

(22) Date of filing: **23.06.2003**

(54) **Method and apparatus for capturing and displaying a three-dimensional scene**

Verfahren und Vorrichtung zur Aufnahme und Darstellung einer dreidimensionalen Szene

Méthode et dispositif pour capturer et pour afficher une image d'une scène en trois dimensions

(84) Designated Contracting States:
**AT BE BG CH CY CZ DE DK EE ES FI FR GB GR HU IE IT LI LU MC NL PT RO SE SI SK TR**

(43) Date of publication of application:
**29.12.2004 Bulletin 2004/53**

(73) Proprietor: **Harman Becker Automotive Systems GmbH**
**76307 Karlsbad (DE)**

(72) Inventors:
• **Strassenburg-Kleciak, Marek**
**85748 Garching (DE)**
• **Wietzke, Joachim**
**76228 Karlsruhe (DE)**

(74) Representative: **Bertsch, Florian Oliver**
**Kraus & Weisert**
**Patentanwälte PartGmbB**
**Thomas-Wimmer-Ring 15**
**80539 München (DE)**

(56) References cited:
• **3RDTECH: "DeltaSphere 3000 3D Scene Digitizer" DELTASPHERE 3000 DATA SHEET, [Online] 2002, pages 1-2, XP002262497 Retrieved from the Internet: <URL:http://www.3rdtech.com/images/dsds02v 5forweb2.PDF> [retrieved on 2003-11-21]**

• **LAURENDEAU D ET AL: "The mapping of texture on VR polygonal models" 3-D DIGITAL IMAGING AND MODELING, 1999. PROCEEDINGS. SECOND INTERNATIONAL CONFERENCE ON OTTAWA, ONT., CANADA 4-8 OCT. 1999, LOS ALAMITOS, CA, USA, IEEE COMPUT. SOC, US, 4 October 1999 (1999-10-04), pages 332-339, XP010358777 ISBN: 0-7695-0062-5**

• **JIANG YU ZHENG ET AL: "Digital archiving of an archaeological excavation site for multimedia display" PATTERN RECOGNITION, 1998. PROCEEDINGS. FOURTEENTH INTERNATIONAL CONFERENCE ON BRISBANE, QLD., AUSTRALIA 16-20 AUG. 1998, LOS ALAMITOS, CA, USA, IEEE COMPUT. SOC, US, 16 August 1998 (1998-08-16), pages 1492-1496, XP010297794 ISBN: 0-8186-8512-3**

• **GRANDJEAN P ET AL: "Multisensory scene interpretation: model-based object recognition" PROCEEDINGS OF THE INTERNATIONAL CONFERENCE ON ROBOTICS AND AUTOMATION SACRAMENTO, APR. 9 - 11, 1991, LOS ALAMITOS, IEEE COMP. SOC. PRESS, US, vol. 2 CONF. 7, 9 April 1991 (1991-04-09), pages 1588-1595, XP010023777 ISBN: 0-8186-2163-X**

• **SHIRAI Y: "3D computer vision and applications" PATTERN RECOGNITION, 1992. VOL.1. CONFERENCE A: COMPUTER VISION AND APPLICATIONS, PROCEEDINGS., 11TH IAPR INTERNATIONAL CONFERENCE ON THE HAGUE, NETHERLANDS 30 AUG.-3 SEPT. 1992, LOS ALAMITOS, CA, USA, IEEE COMPUT. SOC, US, 30 August 1992 (1992-08-30), pages 236-245, XP010029813 ISBN: 0-8186-2910-X**

- **NICCHIOTTI G: "A system for 3D reconstruction and VRML conversion for virtual museums applications" DIGITAL SIGNAL PROCESSING PROCEEDINGS, 1997. DSP 97., 1997 13TH INTERNATIONAL CONFERENCE ON SANTORINI, GREECE 2-4 JULY 1997, NEW YORK, NY, USA,IEEE, US, 2 July 1997 (1997-07-02), pages 421-424, XP010250998 ISBN: 0-7803-4137-6**

- **RIEGL LASER MEASUREMENT SYSTEMS GMBH: LMS-Z210I DATA SHEET, [Online] 31 March 2003 (2003-03-31), pages 1-3, XP002262498 Retrieved from the Internet: <URL:http://www.riegl.com/834628/50940544. pdf> [retrieved on 2003-11-21]**

## Description

Background of the invention

The invention relates to a method and an apparatus grasping a three-dimensional scenery and for displaying such a scenery according to the preambles of the independent claims. Such a method and apparatus are known from DE 42 22 642 A1.

The need for grasping three-dimensional sceneries arises, for example, in modern car navigational systems. In advanced systems, features are desired which allow to display to a user certain sceneries. This display may depend both on the present position of the user as well as on the direction of view. A particular application may, for example, be to present to a user a landmark (e. g. a church or a bridge) as he should see it from his position in order to help him to find his orientation. Other applications may be more or less informational applications for tourists or the like.

If a display of a landmark from differing points of view is desired, data must be stored such that they allow the computation of the image from a particular point of view. Besides that, if a realistic display is desired, realistic color information in fine resolution is necessary.

Generally speaking, display of real sceneries on a screen is in an overall system accomplished such that first the scenery is grasped, the obtained data are stored, and later, when display is desired, an output image is computed with reference to the grasped and stored data.

Grasping a scenery three-dimensionally may be accomplished with a scanning system, e. g. a laser scanner. A laser scanner may scan a scenery following a grid or array along crossing scanning lines, and it may store data triplets reflecting the three-dimensional coordinates of particular surface points of the scenery. It is noted in this respect that "scenery" in the sense of this application is a term that may include objects or a plurality of objects together with the environment and background. Also, closed rooms or walls thereof may be sceneries in the sense of this specification.

Modern laser scanners have distance ranges of several hundred metres, and an angular resolution of better than 0.005 °. Assuming a building in a distance of say 600 metres and an angular resolution of 0.002 °, one would obtain data of scanned points which are about 2 centimeters displaced against each other. Thus, by scanning a scenery in this manner, one would obtain clouds of scanned points, said cloud representing surface points of the scanned scenery. Such a cloud may have millions of points representing an object.

Since enormous amounts of data are to be acquired, the scanning times for every individual scanning point must be as short as possible in order to reach reasonable scanning times. But even if shortest possible scanning times are selected, the scan of one scenery may still last some ten minutes. Obtaining true color information from the scanning laser beam is hardly possible because, on the one hand, the color information transported by the reflected laser beam may be inadequate due to the monochromatic nature of the laser beam, and, further, due to the very short scanning times of the individual points. Thus, obtaining color information from the scanning laser beam is not possible or is only possible with poor results.

DE 42 22 642 A1 discloses an image grasping sensor unit. It comprises a passive sensor which divides a field of view in pixels with differing brightnesses and which feeds processing means. A laser scanner scans surfaces in the field of view. Scanning of the laser scanner is controlled by the image processing means such that laser scan is limited to objects found in the field of view of the passive sensor. The passive sensor and the laser scanner have a common imaging optic. A beam splitter is used for feeding optical signals to the respective evaluating components.

RIEGL LASER MEASUREMENT SYSTEMS GmbH offers a 3D laser imaging sensor "LMS-Z210i" which comprises a 3D laser scanner together with an integrated true color channel. It provides the color of the target's surface as an additional information to each laser measurement. Color data are included in the binary data stream.

D. Laurendeau et al., "The Mapping of Texture on VR Polygonal Models", Proceedings of the Second International Conference on 3D Digital Imaging and Modeling in Ottawa, Ontario, Canada, October 4-8, 1999, IEEE Computing Society, pp 332-339 discloses a method and an apparatus according to the preamble of the independent claims. A similar apparatus is known under the name "DeltaSphere 3000 3D Scene Digitizer" from 3rdTech.

A related method for grasping a three-dimensional scenery is known from Jiang Yu Zheng et al., "Digital Archiving of an Archaeological Excavation Site for Multimedia Display", Proceedings of the 14th International Conference on Pattern Recognition, IEEE 1998.

Summary of the invention

It is the object of the invention to provide a method and an apparatus for grasping a three-dimensional scenery capable of providing good color information.

This object is accomplished in accordance with the features of the independent claims. Dependent claims are directed on preferred embodiments of the invention.

In a method of grasping a three-dimensional scenery, a two-dimensional image of the scenery and three-dimensional coordinates of a plurality of points of the surface of the scenery are taken and stored as preferably separated data sets or files. Data from the image data are allocated to the coordinate data or to data derived from said coordinated data. Thus, image data are taken separately from 3D data, and the data are combined after they were individually taken.

According to a second aspect of the present invention, the 3D data is modified in accordance with information from the 2D image data. Particularly, features (such as edges, corners) may be extracted from the 2D image, and 3D data may be modified in accordance with said extracted features. Particularly, artificially generated 3D points may be added. These added points may be generated such that they lie exactly on the extracted feature. This helps to precisely reproduce the scanned scenery (object), because - when using triangulation - the edges of triangles and, thus, also color boundaries lie precisely on the detected feature and are not spread around it.

Further, the 2D image data may be modified, and in accordance with this modification, the 3D data may be modified. This allows to remove spurious features in the grasped data, e. g. a car parked in front of a building to be scanned.

Image data or data derived from image data may be allocated directly to the data of the respectively scanned points, or they may be allocated to data derived therefrom, e. g. to triangulation data. 3D objects are displayed on a 2D screen by filling triangles between nearby points with given colors. These triangles are derived from the 3D scan data, and color information may thus also be allocated to triangulation data.

An apparatus for grasping a three-dimensional scenery comprises means for taking a two-dimensional image of the scenery, means for taking three-dimensional coordinates of a plurality of points on the surface of the scenery and means for allocating data from the image data to the coordinate data or to data derived from said coordinate data. An apparatus for grasping a three-dimensional scenery is adapted to carry out the method of grasping a three-dimensional scenery as described above.

In a method of displaying a three-dimensional real scenery on a screen, the three-dimensional scenery is grasped with a method as described hereinabove or hereinunder, and the scenery is displayed with reference to the coordinate data or data derived therefrom and with reference to the allocated image data. Display may be accomplished by triangulation, i. e. by determining triangles between adjacent scanned points and by filling said triangles with one or more colors determined by those data allocated to the points from which the triangle is drawn.

Brief description of the drawings

The present invention can be better understood by reference to the drawings in which

Figure 1    is a schematic drawing showing in a superimposed manner imaging and scanning of a scenery,
Figure 2    is a schematic hardware representation of the apparatus for grasping a three-dimensional scenery,
Figure 3    is a representation of 3D data obtained from a scanning,
Figure 4    is the representation of data obtained by a method according to the invention,
Figure 5    is a flow chart of a method of grasping a scenery,
Figure 6    is an enlarged representation of a featured region of the image shown in Fig. 1, and
Figures 7, 8    are flow charts for various methods and variations thereof.

Description of the preferred embodiments

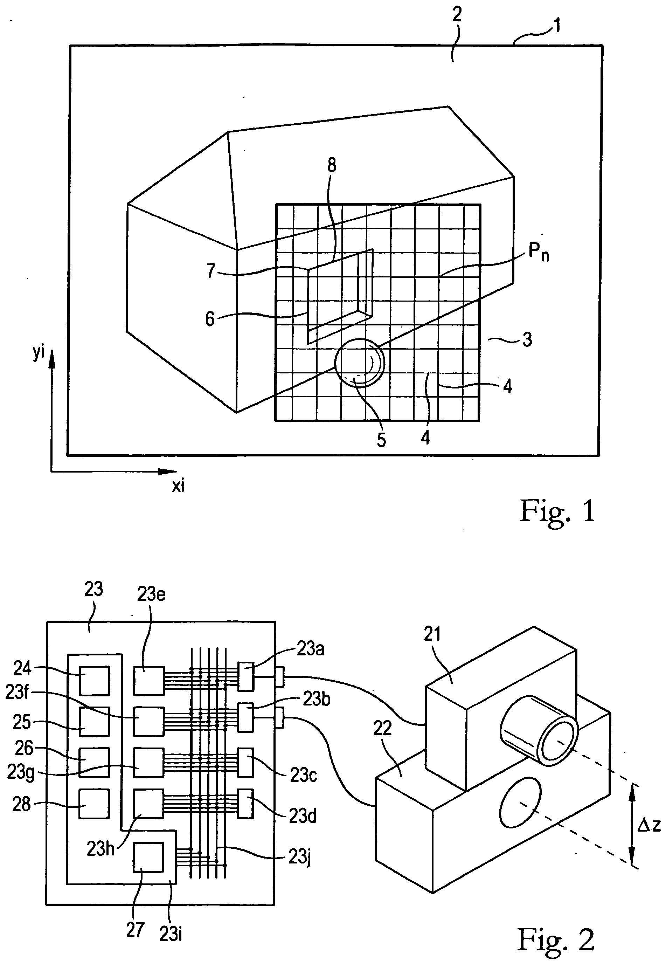

Fig. 1 shows schematically in a superimposed manner an image area and a scan area. The image 2 has a border 1. By way of example, an image was drawn showing a house having a window, the window with its edges 6, 8 and corner 7 being an example for a featured region in the image. Besides that, as an example for a spurious feature, a ball 5 is depicted. Image 2 may be a bitmap or a file in a suitable data format such aus .jpg. The image may be thought of as consisting of pixels arranged in rows and columns, the individual pixels being addressable by image coordinates $x_i$ and $y_i$ as shown in the lower left corner of the image of Fig. 1. Fig. 1 also shows a scanning field with border 3 in which along scanning lines and colums 4 (shown as a grid which in reality, of course, does not exist) points $P_n$ are scanned for their 3D coordinates. The boundary 3 of the scanning field may be the same as, or (as shown), different from the boundary 1 of the image 2. As shown, the scanning rows and columns cover the scanning field within scanning boundary 3 and they cover all accessible surface parts within the scenery, i. e. the wall, the window opening, the ball, and the like. For every scanning point P data are acquired which represent the position of the respective point in space. In a scanning range of several hundred metres, realistic accuracies are $\pm$ 1 cm. The scanning itself may be made in spherical coordinates. The scanning laser beam is guided across the surface of the scenery, its position being determined by azimuth $\lambda$ and elevation $\varphi$. Besides that, the distance r from the scanner to the surface may be determined by run-time measurement, so that finally the coordinates of point P may be given as

$$P: r, \lambda, \varphi \qquad P(n): r(n), \lambda(n), \varphi(n) \qquad \ldots \ldots \ldots \quad (1)$$

n is an index discriminating the different scanned points.

A pixel I of the image may be thought of as given by suitable data formats, for example, by given red R, green G, and blue B intensites or by given yellow Y, magenta M, cyan C, and black B intensities, as expressed hereinunder

$$I: \qquad R, G, B \quad or \quad Y, M, C, B \qquad \ldots \ldots \ldots \quad (2)$$

I(xi, yi): R(xi, yi), G(xi, yi), B(xi, yi) or
I(xi, yi): Y(xi, yi), M(xi, yi), C(xi, yi), B(xi, yi).

As already said, xi and yi are the pixel coordinates in the image.

Fig. 2 shows schematically hardware that can be used for carrying out the method. 21 is an imaging device, for example, a regular digital photocamera. 22 is a laser scanner that may operate as described above. 23 is a computer which may have the following components: interface 23a for imaging device 21, interface 23b for scanner, further I/O interfaces 23c, 23d, changeable memory media (floppy, CD, DVD) 23e, hard drive 23f, CPU 23g, ROM 23h, RAM 23i, and a bus 23j interconnecting the above-mentioned components. For RAM 23i certain data regions 24-28 are symbolized, which, of course, may find their copy on hard drive 23f; 24 represents the data obtained from imaging device 21, 25 represents data obtained from scanner 22, 26 represents combined data, 28 represents correction data, and 27 represents general data.

Imaging device and scanner may also have a partially common optical path and a beam splitter for separating optical signals for the imaging device and the scanner, respectively, which may have separate shutters.

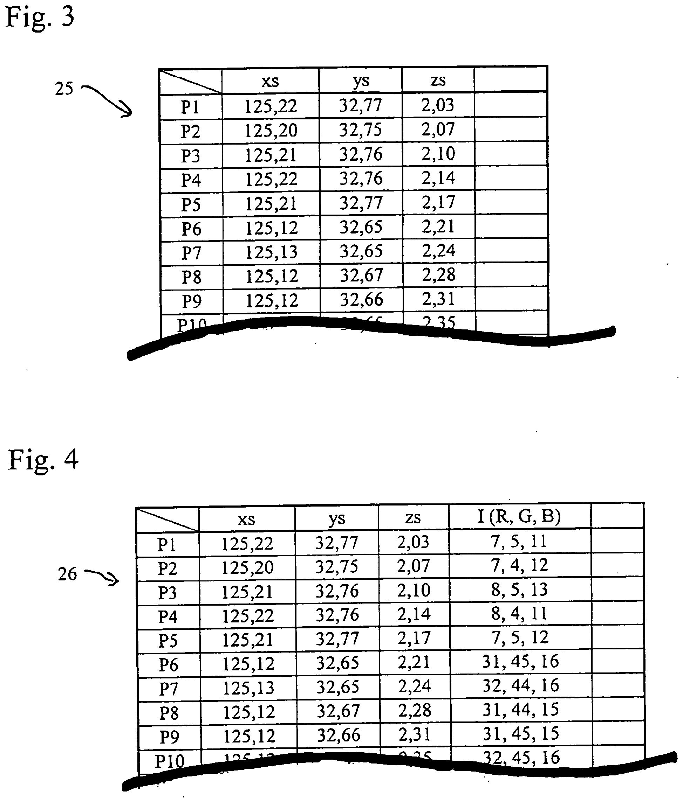

Image data 24 obtained by imaging device or camera 21 may be a standard data file such as .bmp, .jpg, .gif, .tif, or the like. The data obtained by scanner 22 may be as shown in Fig. 3. They are a sequence of coordinate data describing the 3D coordinates for every individual point P1, P2, ..., Pn, .... For P1, values in a carthesian coordinate system xs, ys, and zs are given, for example, as follows: The xs value may be 125,22 m (125 metres 22 centimeters), the ys value may be 32,77 m, and the zs value may be 2,03 m, by way of example.

As shown in Fig. 3, data obtained by scanner 22 may go through a coordinate conversion to transform coordinates from a first coordinate system into a second coordinate system. For example, a transformation from a spherical coordinate system (P:r, $\lambda$, $\varphi$) into a carthesian coordinate system (P:xs, ys, zs) may take place in accordance with the following equation:

$$r, \lambda, \varphi \text{ --> } xs, ys, zs \qquad \sim \ldots \ldots \ldots \quad (3)$$

$$xs = r * cos((p) * cos(X)$$
$$ys = r * cos((p) * sin(\lambda)$$
$$zs = r * sin(\varphi).$$

In a spherical coordinate system, r is the distance from the origin to the point measured, $\varphi$ is the angle between the pointer to the point measured and the x-y-plane (elevation), and $\lambda$ is the angle between the x-axis and the projection of the pointer on the x-y-plane (azimuth). Further coordinate transformations may be performed, e.g., to bring the coordinates into an absolute coordinate system in which also a viewer's position may be given.

In allocating data from the 2D image data to the 3D data obtained by scanning (and possible tranformation and - as described later - modification) one may project the scanning points on the image in order to find image coordinates xi, yi corresponding to the 3D coordinates obtained from scanning. Said projection may be accomplished mathematically and has the result that for 3D coordinates of a scanned point corresponding coordinates of the same point in the image xi, yi are obtained, symbolized as follows.

$$xs, ys, zs \text{ --> } xi, yi \qquad \ldots \ldots \ldots \quad (4)$$

with the thus obtained image coordinates (pixel coordinates) xi, yi, the image data can be accessed, and the image data I (xi, yi) can be retrieved. One may, for example, at specific xi, yi values, obtain RGB-values 7, 5, 11. These values (occasionally called color hereinunder) are added to the respective 3D coordinate data, and they have the meaning of representing the color of the scanned point. Thus, the obtained data may have a format as shown in Fig. 4, which is one embodiment of the data region 26 as shown in Fig. 2: For the individual points P1, P2, ... the coordinate data are unchanged, but color data (e. g., RGB-data) are added. A point P may, therefore, be written as follows:

$$\text{P: xs, ys, zs, color} \qquad \text{P(n): xs(n), ys(n), zs(n), color(n)} \qquad \ldots\ldots\ldots \qquad (5)$$

Color being the representation of the color data. Thus, one can say that the result is 3D scan data combined with color information obtained from a 2D image, the combination being made for every point.

Since the color information in a digital photo has a much higher quality than color information obtained from a reflected laser beam, the color information added to the coordinate information is of much higher quality, and thus also the finally generated images have a much higher color quality.

As already said earlier, instead of allocating color information as shown in Fig. 4 to coordinate data, color information may be added to data derived from coordinate data, e. g. triangulation data. The method may be such that, from the scanned scenery coordinates, triangulation data are determined, and from said triangulation data the image coordinates xi, yi for retrieving image information are determined. For example, the center of gravity of a triangle may be taken as the 3D coordinate for which xi, yi in the image is determined. The image color at xi, yi is then allocated to the related triangulation data. In another approach, image information (color) may be added to triangulation data with reference to image information (color) added earlier to the respective 3D point coordinates. It is pointed out that also triangulation data are then stored in a three-dimensional format. Otherwise, it would not be possible to draw an image from different points of view.

As already said, the image taking means 21 may be digital camera. The means 22 for taking three-dimensional coordinates may be a laser scanner. They may be two more or less separate devices particularly with separate optical systems. Some kind of registration can take place either by mechanically adjusting the optical axis of the two systems, or by providing conversion information which allows computational registration of the image data to the 3D data. By way of registration at least one set of 3D and 2D coordinates is defined which is known to be corresponding to each other and thus being allocatable. This registration information is stored.

If different optical systems are used, a paralax error may occur. The optical paths may be offset against each other for example vertically by a value symbolized with $\Delta z$ in Fig. 2, and accordingly the two systems see the scenery slightly different, this effect being the more important the closer the scanned surfaces of the scenery are. Thus, a step of compensating parallax errors may be provided. Parallax errors may be compensated by performing a turning operation on the 3D data obtained by the scanner. Such a turning operation is a mathematical operation which may be expressed in form of a matrix applied to the original vectorial input data to obtain vectorial output data, the latter being the turned data. The turning angle $\delta$ may be determined in accordance with formula (6):

$$\delta = \arcsin\left(\Delta z / d\right) \qquad \ldots\ldots\ldots \qquad (6),$$

wherein $\Delta z$ is the distance between the optical paths directed towards the target (cf. Fig. 2), and d is the distance to the target.

Further, when 3D-data are projected on the 2D image data, a compensation for projection errors may be employed. This compensation may use correction values obtained previously. Correction values may be obtained by taking an image of a known pattern (e. g. a check-board pattern) with camera 21 in order to determine projection properties and possible correction values, particularly for marginal areas of the image.

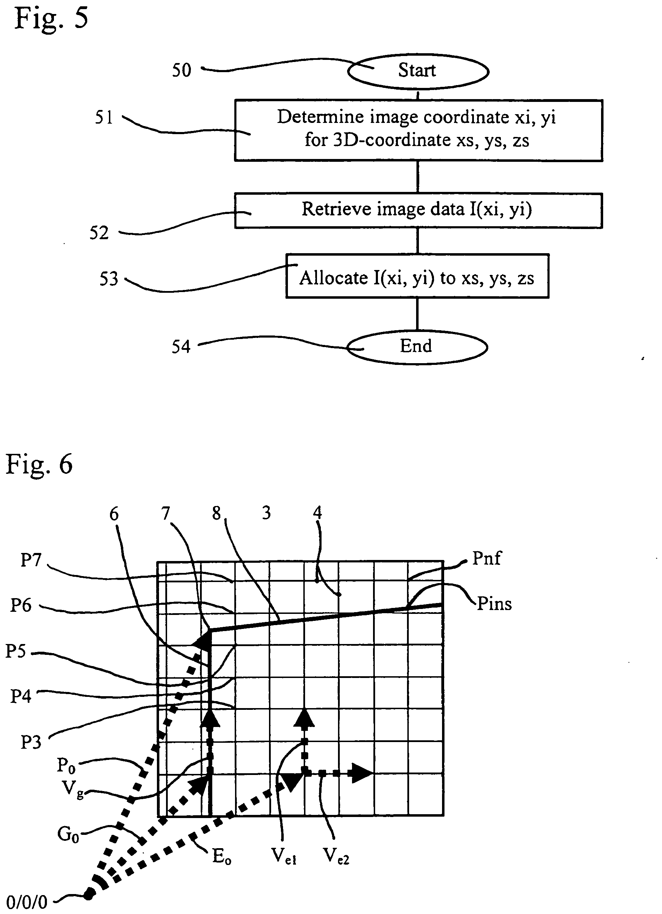

Fig. 5 shows schematically the flow chart for the method described so far: After start in step 50, for all the 3D-coordinates xs, ys and zs corresponding image coordinates xi, yi are determined in step 51. Basically, this is made to find the position in an image corresponding to a specific point of a surface of the scenery. In accordance with the image coordinates xi, yi, image data are retrieved in step 52. The thus retrieved data or data derived therefrom are allocated to the 3D point data in step 53. The sequence of steps 51 to 53 is repeated for all scanning points as far as they lie within the boundary 1 of the image. Generally speaking, the image data allocated to coordinate data may be color data and/or intensity data and/or luminance data and/or grey scale data.

3D data may be modified in accordance with features in the 2D image. This is explained more in detail with reference to Fig. 6, which shows, by way of example, an enlarged view of the upper left corner of the window shown in Fig. 1. The edges 6 and 8 as well as the corner 7 may be considered as features F. In the image, one may assume that, for example the building's wall left and above of the edges 6, 8 may be comparatively light, whereas the window openig right of and below the edges may be comparatively dark. The scanning grid 4 is also represented in Fig. 6. Again, it is pointed out that the scanning grid is here shown only for sake of clarity. It does realistically not exist, neither in the image data nor in the 3D data.

Fig. 6 nevertheless shows that, of course, the scanning does not properly reflect features 6, 7, 8. Basically, one can assume that resolution of the 3D scan by scanner 22 is lower than resolution of the image obtained by camera 21. Thus, the 3D points obtained by scanning will scan the features in a much coarser manner than the imaging device 21. The triangulation used for representing the scanned scenery would then render a very course or imperfect representation of the feature because triangulation could without further measures be done only between those points that were scanned. Only few of them lie on the feature itself, most of them are more or less remote from the feature, and thus also the boundaries of the triangles used for a triangulation would differ from the real feature, e. g. an edge.

Thus, according to the invention, features could be detected in the image, and 3D point data could be modified in accordance with the detected feature. Modification may be altering coordinates of already existing points or adding points.

Also, uniform areas may be considered to be a feature in this sense, and a corresponding modification of point data could be to delete data from uniform regions in order to reduce data amount and improve processing speed. This may be done under the assumption that an uniform (monochrom within given limits) area in an image of a scenery represents some kind of plane, for example, a straight wall of a building as shown in the right hand part of the scanning region in Fig. 1. It is not necessary to maintain every single scanning point of this area. Rather, in an extreme case three of them would be sufficient to define the position of the plane in space. Besides that, its limitations are required. But, at least theoretically, it is not necessary to overdetermine the plane. If drawn by a triangulation technique, one would with a reduced amount of points in the cloud of points obtain larger triangles instead of smaller ones, which may still be sufficient to render a true representation of the grasped scenery.

One aspect limiting the reduction of scanned points may be the wish to obtain a vivid color representation of the scenery: Fewer stored scanning points mean larger triangles and thus larger monochrom areas in the image drawn from the stored data (assuming that one larger or smaller triangle in the triangulation technique is mono-chromously filled). Thus, with larger triangles lower slight color variations are possible and a thus represented image may look more artificial than drawn from a higher amount of data.

Feature extraction from 2D images may be done automatically by appropriate means, for example by running filter matrixes across the image pixels to detect monochrom areas or edges. Feature extraction may also be done manually by identifying them by an operator on a screen. Also, automatic extraction and confirmation by an operator may be used.

Fig. 6 shows an enlarged area of Fig. 1. Shown is the part of the image and scanning region where the upper left corner of the window is imaged and scanned. Same reference numerals as in Fig. 1 denominate same items. Fig. 6 thus shows more or less monochrom regions (wall area and window area) and two edges 6, 8 and a corner 7. Feature extraction may, for example, mean that the image coordinates $xi$, $yi$ of the points on the feature are known, either explicitly in some kind of table or implicitly by some kind of equation.

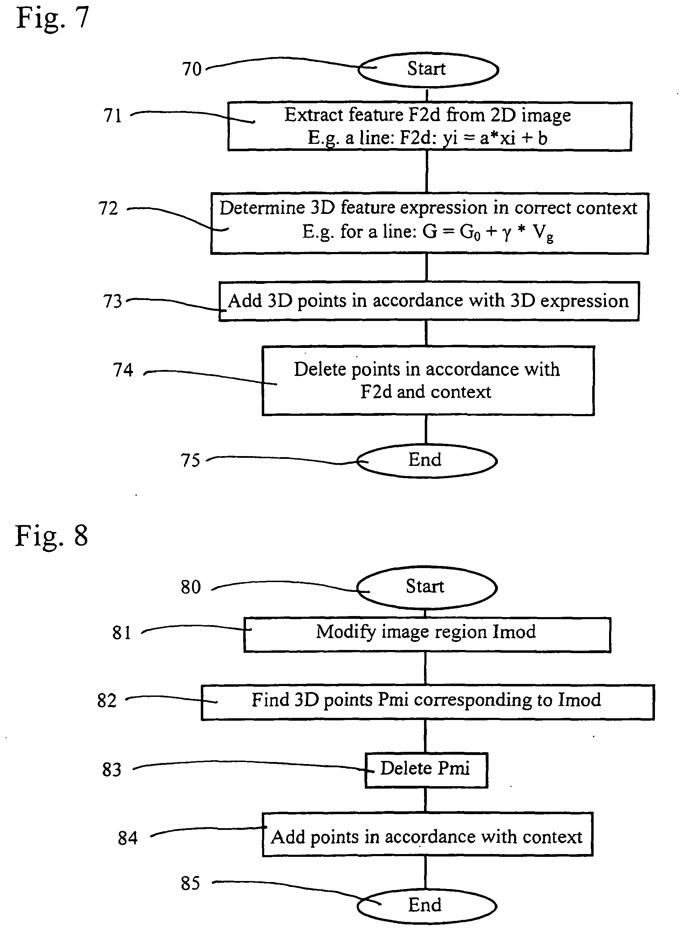

Fig. 7 shows a flow chart for modifying point data in accordance with features extracted from the image. After start in step 70, in step 71 a feature is extracted. On the one hand, it is assumed here that a feature in the two-dimensional image F2d is a straight edge and will finally be described as an equation in the form below:

$$yi = a * xi + b, \quad x1 < xi < x2 \qquad \ldots\ldots\ldots \qquad (7)$$

with $a$ and $b$ being parameters of a mathematically described straight line (offset, slope) and $x1$ and $x2$ being the boundaries between which the x-coordinate of the feature runs. On the other hand, a feature also represents an entity in space, in case of a straight line it is a straight line (e.g. edge) in space, in case of a point it is a point (e.g. a corner) in space, and in case of a plane, it is a plane (surface) in space. These features may be described in a vectorial manner as described by equations (8) to (10):

$$G: \quad G = G_0 + \gamma * V_g, \gamma 1 < \gamma < \gamma 2 \qquad \ldots\ldots\ldots \qquad (8)$$

$$E: \quad E = E_0 + \mu * V_{e1} + \nu * V_{e2}, \mu 1 < \mu < \mu 2, \nu 1 < \nu < \nu 2 \qquad \ldots\ldots\ldots \qquad (9)$$

$$P: \quad P = P0 \qquad \ldots\ldots\ldots \qquad (10),$$

wherein G is a 3D point on a straight line, $G_0$ is a 3D starting point on said straight line, $V_g$ is a vector parallel to the straight line, and $\gamma$ is a scalar variable; E is a 3D point on a plane, $E_0$ is a 3D starting point on said plane, $V_{p1}$ and $V_{p2}$

are non-parallel vectors in said plane, and $\mu$, $\nu$ are scalar variables; and P is the same as $P_0$, namely an individual 3D point (e. g. corner) in space. $\gamma 1$ and $\gamma 2$ are the limits for the scalar variable $\gamma$; and $\mu 1$, $\mu 2$, $\nu 1$, and $\nu 2$ are the limits, respectively, for the scalar variables $\mu$ and $\nu$, which may, however, be of complex form or may also depend on each other. These representations are schematically shown also in Fig. 6 where $P_0$ points to feature 7, the corner of the window, where the vertical edge of the window is selected for a vectorial representation of a straight line, and where the window opening as an example for a plane is selected for a vectorial representation of a plane. The pointers $P_0$, $G_0$, and $E_0$ start at the origin 0/0/0 of the selected 3D coordinate system. By varying $\gamma$ for a straight line and $\mu$, $\nu$ for a plane, all the 3D points G on a straight line or E on a plane in space may be accessed.

After feature extraction in the 2D image, the corresponding vectorial 3D expression is determined. This can be done by determining 3D points in space having a 2D projection on the image in which in the projection coordinates xi and yi correspond to coordinates of the 2D expression of the feature. The 3D expression of the feature must fit to the so-called 3D "context", i. e. the real 3D surrounding of the feature in the 3D scenery. A fitting 2D projection on the 2D image alone is not sufficient because then the image derived from the finally generated 3D data would most likely not be correct.

When the correct 3D expression for the feature is determined, points are added in accordance with said expression. For example, if the feature in the 2D image was a line such as the representation of the upper edge 8 of the window represented in Figs. 1 and 6, the 3D feature expression would have the form as shown in equation (8), and 3D points G could be added to the cloud of points by varying $\gamma$ in an appropriate step width and inserting the thus computed G-coordinates as points Pins to the already existing points. Thus, points would be added to the measured cloud of points which lie precisely on the feature, thus allowing a proper representation of said feature when drawing again a 2D image from said 3D data. Besides that, measured points near a feature Pnf may be deleted, for example in an attempt to reduce data quantity. Deleting measured points and adding new ones as described above may in combination also be understood as shifting measured 3D points in accordance with a feature in the 2D image.

Further, as explained hereinafter with reference to Figs. 1 and 8, an image region may be modified, and 3D point data may be modified, e.g. added, deleted, shifted in accordance with the modified image data. Purpose of this may be to remove spurious features, such as ball 5 in Fig. 1. When grasping an object under real conditions, it will not always be possible to keep a scenery free of spurious features. For example, if a church is to be scanned, it might be impossible to avoid cars parked in front of the church, trafic signs or the like. These features may be both imaged in the 2D image and scanned in the 3D scan, but are actually not desired to be reproduced when drawing an image from said data. Thus, removal of these features is desired and it can be done as follows:

In the 2D image, the ball can be removed by image processing, which may take place more or less automatically or manually. For example, the ball 5 may simply be cut out, and the "hole" may be filled with the respectively surrounding colors, i. e. in the one (lower right) part by filling it with the ground color, and in the other (upper left) part by filling it with the color of the wall. Thus, in the image, the spurious feature is removed. It (i. e. the ball 5) is nevertheless still present in the 3D points. The 3D data, and particularly the spurious 3D data can be modified as follows:

The corresponding data (i. e. those representing the ball's surface in a 3D manner, are identified, for example, by finding those 3D points which have a projection on the modified area in the 2D image. In one embodiment, these 3D points may be deleted. Thus, the spurious 3D data are removed. If it was a comparatively little image part, the method may stop here because triangulation, when drawing a 2D image from the 3D data, would fill the gap anyway. If it was, however, a large feature, such as a car, then artificially generated 3D points may be added. This may, again, take place by determining the 3D context (3D features) surrounding the worked area and by extrapolating these features into the worked area. Features surrounding ball 5 in Fig. 1 would, for example, be the lower edge of the building, the wall above the edge and the ground below the edge. These features would be respectively expressed in 3D manner as described above. These expressions would be used to extrapolate the 3D data into the worked area. The edge would be described in accordance with formula (8), whereas the ground and the wall could be described by respective formulas resembling formula (9). These formulas respectively applied in a determined range of their scalar parameters would give 3D points used for filling up the cloud of points corresponding to the worked area in the image.

An example of projecting 3D points of a scenery defined by xs, ys, and zs on an image plane defined with coordinates xi, yi may for the special case that the image plane is located at ys = constant and xi axis parallel to xs axis, yi axis parallel to zs axis, be written as follows:

$$xi = xs * ys / y0, \quad yi = zs * ys / y0 \qquad \ldots\ldots\ldots \quad (11),$$

wherein xi, yi are the coordinates in the image, xs, ys, zs are the coordinates of a point of the scenery in space, and y0 is a scaling parameter (corresponding to the position of the image plane on the ys axis), which may selected such that magnification is such that xi, yi correspond to pixel coordinates. Formula 11 is written from a point of a view that the observer is in the center of the xs, ys, zs coordinate system and the image plane is parallel to the xs, zs plane. For generalized cases, shifts and turns can be applied.

Vice versa, 3D coordinates xs, ys, zs can be computed from image coordinates by assuming a pointer from the observer through the image coordinates towards the scenery. This pointer may be expressed as a straight line in the sense of equation (8). In a next step, a plane of the scenery (for example, plane of the window in Fig. 1) is determined and expressed by equation (9). By setting equal equations (8) and (9) one obtains a vectorial equation with three unknowns $\gamma$, $\mu$ and $\nu$. Since three equations (one for x, one for y, and one for z) are involved, the system can be resolved to find the xs, ys, and zs coordinates of a point in space corresponding to xi, yi.

If the field of view of one camera/ scanner positioning is not enough, they may, after imaging and scanning, be turned for a given angle (e. g. 60 °). With this new orientation, the scenery is again imaged and scanned. Preferably, a turn is made around a vertical axis. If required, this could be repeated until a full turn (360 °) was taken. The respectively gained clouds of 3D points can be combined either by using a common coordinate system for all orientations, or by computational data conversion (for example, turning them back by the angle for which a camera and scanner were turned), which can be accomplished by applying matrices to the found data.

If points in space (3D points) are modified or added as described above, data from the image data may be allocated to these modified or added points as if they were originally taken points (scanned 3D points). Likewise, data from image data may be allocated to data derived from said modified or added 3D point data.

The thus compiled 3D data are suitable for describing an object in space together with well-adapted color information. Instead of color information, also pattern information may be added to point data, or generally speaking information from the 2D image, which may be direct information or information derived therefrom.

Drawing an image from the thus prepared data may be accomplished as follows: The object to be imaged (to be displayed on a screen) is selected, either automatically or also by an user. Besides that, the position of the viewer is determined. This again may happen automatically or may be selected by a user. An automatic determination may, for example, be a default position (e. g. "100 metres in front of the main entrance of a church") or the current position in a car navigational system. From these informations, the point of view of the user is determined, and in accordance with this point of view a projection of the object data on an image plane is computed. This may be done from the 3D coordinates of the points of the cloud of points or from triangulation data. Color is added to the projected points in accordance with the image data allocated to the 3D data or data derived therefrom.

## Claims

1. Method of grasping a three dimensional scenery, comprising the steps:

   taking a two-dimensional image of the scenery and storing the image data, and
   taking three-dimensional coordinates of a plurality of points on the surface of the scenery and storing the coordinate data,
   **characterized by**
   detecting (71) edge features in the image data, and
   modifying (73, 74, 81, 82, 83, 84) the three-dimensional coordinate data by shifting coordinates or adding (73, 84) coordinates of points in accordance with the detected edge features, and
   allocating (53) data from the image data, particularly luminance data and/or color data, to said modified coordinate data or to data derived therefrom.

2. The method of claim 1, **characterized in that** a parallax error is compensated by converting the coordinates.

3. The method of one or more of claims 1 or 2, **characterized in that** edge information is extracted from the image data, coordinate data are modified in accordance with said edge information, particularly by shifting coordinates or adding coordinates of points in accordance with said edge information.

4. The method of one or more of the preceding claims, **characterized in that** the image data are modified, coordinate data are modified in accordance with information from the modified image data, and data from the modified image data are allocated to said modified coordinate data or to data derived therefrom.

5. The method of claim 4, **characterized in that** regions in the image data are modified by replacing image data in said image region, coordinate data corresponding to the modified regions in the image are modified, and data from the modified image data are allocated to said modified coordinate data

6.  The method of one or more of the preceding claims, **characterized in that** the image is taken with a digital camera.

7.  The method of one or more of the preceding claims, **characterized in that** the coordinates are taken with a laser scanner.

8.  The method of one or more of the preceding claims, **characterized in that** taking the image and taking the coordinates is made through different optical systems or with different shutter times.

9.  The method of one or more of the preceding claims, **characterized in that** allocating image data to coordinate data or to data derived therefrom comprises allocating to coordinates of a surface point of the scenery values of luminance and/or color found in the image at a position corresponding to the coordinates.

10.  The method of claim 9, **characterized in that** projection errors are compensated.

11.  The method of claim 10, **characterized in that** compensation is made in accordance with correction values obtained by taking the image of a known test image.

12.  Method of displaying a three dimensional real scenery on a screen, comprising the steps:

    grasping the three dimensional scenery with a method in accordance with one or more of the preceding claims, displaying the scenery with reference to the coordinate data or data derived therefrom, and with reference to the allocated image data.

13.  The method of claim 12, **characterized in that** displaying the scenery comprises projecting the three-dimensional image data or data derived therefrom on a selectable plane and coloring the displayed image in accordance with respectively allocated image data.

14.  Apparatus for grasping a three dimensional scenery, comprising:

    means (21) for taking a two-dimensional image (2) of the scenery and storing the image data (24), and
    means (22) for taking three-dimensional coordinates of a plurality of points (P1, ..., Pn, ...) on the surface of the scenery and storing the coordinate data (25),
    **characterized by**
    means (23) for detecting edge features in the image data, and for modifying the coordinate data by shifting coordinates or adding coordinates of points in accordance with the detected edge features, and for allocating data from the image data, particularly luminance data and/or color data, to said modified coordinate data or to data derived therefrom.

15.  Apparatus according to claim 14, **characterized in that** the image taking means (21) is a digital camera and the coordinate taking means (22) is a scanner.

16.  Apparatus according to claim 14 or 15, **characterized in that** the image taking means (21) and the coordinate taking means (22) have different optical paths.

17.  Apparatus according to one or more of the claims 14 to 16, **characterized in** comprising means for registering the image taking means (21) and the coordinate taking means (22).

18.  Apparatus according to claim 17, **characterized in that** the registering means (21) comprise mechanical means.

19.  Apparatus according to claim 17 or 18, **characterized in that** the registering means (21) comprise data processing means.

20.  Apparatus according to one or more of the claims 14 to 19, **characterized in** comprising a first shutter means for the image taking means (21) and a second shutter means for the coordinate taking means (22).

21.  Apparatus according to one or more of the claims 14 to 20, **characterized in** comprising data (28) for correcting projection distortions of coordinate data (25).

**22.** Apparatus according to one or more of the claims 14 to 21, **characterized in** comprising means for changing the field of view of the image taking means (21) and of the coordinate taking means (22).

**23.** Apparatus according to one or more of the claims 14 to 22, **characterized in that** the apparatus is adapted to carry out the method according to any one of claims 1 to 13.

**Patentansprüche**

**1.** Verfahren zur Erfassung einer dreidimensionalen Szenerie, die folgenden Schritte umfassend:

Aufnehmen eines zweidimensionalen Bildes der Szenerie und Speichern der Bilddaten, und
Aufnehmen von dreidimensionalen Koordinaten einer Vielzahl von Punkten an der Oberfläche der Szenerie und Speichern der Koordinatendaten,
**gekennzeichnet durch**
Detektieren (71) von Randmerkmalen in den Bilddaten, und
Modifizieren (73, 74, 81, 82, 83, 84) der dreidimensionalen Koordinatendaten durch Verschieben von Koordinaten oder Hinzufügen (73, 84) von Koordinaten von Punkten gemäß den detektierten Randmerkmalen, und
Zuweisen (53) von Daten von den Bilddaten, insbesondere Helligkeitsdaten und/oder Farbdaten, zu den modifizierten Koordinatendaten oder zu davon abgeleiteten Daten.

**2.** Verfahren nach Anspruch 1, **dadurch gekennzeichnet, dass** ein Parallaxenfehler durch Umwandeln der Koordinaten kompensiert wird.

**3.** Verfahren nach einem oder mehreren der Ansprüche 1 oder 2, **dadurch gekennzeichnet, dass** Randinformationen aus den Bilddaten extrahiert werden, Koordinatendaten gemäß den Randinformationen modifiziert werden, insbesondere durch Verschieben von Koordinaten oder Hinzufügen von Koordinaten von Punkten gemäß den Randinformationen.

**4.** Verfahren nach einem oder mehreren der vorhergehenden Ansprüche, **dadurch gekennzeichnet, dass** die Bilddaten modifiziert werden, Koordinatendaten gemäß Informationen von den modifizierten Bilddaten modifiziert werden, und Daten von den modifizierten Bilddaten den modifizierten Koordinatendaten oder davon abgeleiteten Daten zugewiesen werden.

**5.** Verfahren nach Anspruch 4, **dadurch gekennzeichnet, dass** Regionen in den Bilddaten modifiziert werden, indem Bilddaten in der Bildregion ausgetauscht werden, Koordinatendaten entsprechend den modifizierten Regionen in dem Bild modifiziert werden, und Daten von den modifizierten Bilddaten den modifizierten Koordinatendaten zugewiesen werden.

**6.** Verfahren nach einem oder mehreren der vorhergehenden Ansprüche, **dadurch gekennzeichnet, dass** das Bild mit einer Digitalkamera aufgenommen wird.

**7.** Verfahren nach einem oder mehreren der vorhergehenden Ansprüche, **dadurch gekennzeichnet, dass** die Koordinaten mit einem Laserscanner aufgenommen werden.

**8.** Verfahren nach einem oder mehreren der vorhergehenden Ansprüche, **dadurch gekennzeichnet, dass** das Aufnehmen des Bildes und das Aufnehmen der Koordinaten durch unterschiedliche optische Systeme oder mit unterschiedlichen Verschlusszeiten erfolgt.

**9.** Verfahren nach einem oder mehreren der vorhergehenden Ansprüche, **dadurch gekennzeichnet, dass** das Zuweisen von Bilddaten zu Koordinatendaten oder zu davon abgeleiteten Daten das Zuweisen zu Koordinaten eines Oberflächenpunktes der Szeneriewerte von Helligkeit und/oder Farbe umfasst, die in dem Bild an einer Position entsprechend den Koordinaten zu finden sind.

**10.** Verfahren nach Anspruch 9, **dadurch gekennzeichnet, dass** Projektionsfehler kompensiert werden.

**11.** Verfahren nach Anspruch 10, **dadurch gekennzeichnet, dass** Kompensation gemäß Korrekturwerten erfolgt, die durch Aufnehmen des Bildes eines bekannten Testbildes erhalten werden.

**12.** Verfahren zur Darstellung einer dreidimensionalen realen Szenerie auf einem Bildschirm, die folgenden Schritte umfassend:

Erfassen der dreidimensionalen Szenerie mit einem Verfahren gemäß einem oder mehreren der vorhergehenden Ansprüche,
Darstellen der Szenerie in Bezug auf die Koordinatendaten oder davon abgeleiteten Daten, und in Bezug auf die zugewiesenen Bilddaten.

**13.** Verfahren nach Anspruch 12, **dadurch gekennzeichnet, dass** das Darstellen der Szenerie das Projizieren der dreidimensionalen Bilddaten oder davon abgeleiteten Daten auf einer auswählbaren Ebene und das Farbgeben des angezeigten Bildes gemäß jeweils zugewiesenen Bilddaten umfasst.

**14.** Vorrichtung zur Erfassung einer dreidimensionalen Szenerie, umfassend:

Mittel (21) zum Aufnehmen eines zweidimensionalen Bildes (2) der Szenerie und Speichern der Bilddaten (24), und
Mittel (22) zum Aufnehmen von dreidimensionalen Koordinaten einer Vielzahl von Punkten (P1,...Pn,...) auf der Oberfläche der Szenerie und Speichern der Koordinatendaten (25),
**gekennzeichnet durch**
Mittel (23) zum Detektieren von Randmerkmalen in den Bilddaten, und zum Modifizieren der Koordinatendaten durch Verschieben von Koordinaten oder Hinzufügen von Koordinaten von Punkten gemäß den detektierten Randmerkmalen, und zum Zuweisen von Daten von den Bilddaten, insbesondere Helligkeitsdaten und/oder Farbdaten, zu den modifizierten Koordinatendaten oder zu davon abgeleiteten Daten.

**15.** Vorrichtung nach Anspruch 14, **dadurch gekennzeichnet, dass** das Bildaufnahmemittel (21) eine Digitalkamera ist und das Koordinatenaufnahmemittel (22) ein Scanner ist.

**16.** Vorrichtung nach Anspruch 14 oder 15, **dadurch gekennzeichnet, dass** das Bildaufnahmemittel (21) und das Koordinatenaufnahmemittel (22) unterschiedliche optische Strecken aufweisen.

**17.** Vorrichtung nach einem oder mehreren der Ansprüche 14 bis 16, **dadurch gekennzeichnet, dass** sie Mittel zum Registrieren des Bildaufnahmemittels (21) und des Koordinatenaufnahmemittels (22) umfasst.

**18.** Vorrichtung nach Anspruch 17, **dadurch gekennzeichnet, dass** die Registrierungsmittel (21) mechanische Mittel umfassen.

**19.** Vorrichtung nach Anspruch 17 oder 18, **dadurch gekennzeichnet, dass** die Registrierungsmittel (21) Datenverarbeitungsmittel umfassen.

**20.** Vorrichtung nach einem oder mehreren der Ansprüche 14 bis 19, **dadurch gekennzeichnet, dass** sie ein erstes Verschlussmittel für das Bildaufnahmemittel (21) und ein zweites Verschlussmittel für das Koordinatenaufnahmemittel (22) umfasst.

**21.** Vorrichtung nach einem oder mehreren der Ansprüche 14 bis 20, **dadurch gekennzeichnet, dass** sie Daten (28) zum Korrigieren von Projektionsverzerrungen von Koordinatendaten (25) umfasst.

**22.** Vorrichtung nach einem oder mehreren der Ansprüche 14 bis 21, **dadurch gekennzeichnet, dass** sie Mittel zum Ändern des Sichtfeldes des Bildaufnahmemittels (21) und des Koordinatenaufnahmemittels (22) umfasst.

**23.** Vorrichtung nach einem oder mehreren der Ansprüche 14 bis 22, **dadurch gekennzeichnet, dass** die Vorrichtung ausgelegt ist, um das Verfahren nach einem der Ansprüche 1 bis 13 durchzuführen.


**Revendications**

**1.** Méthode de saisie d'une image d'une scène en trois dimensions, comprenant les étapes :

de prise d'une image de la scène en deux dimensions et de stockage des données d'image, et

de prise de coordonnées en trois dimensions d'une pluralité de points sur la surface de la scène et de stockage des données de coordonnées,

**caractérisée par**

la détection (71) des caractéristiques de bord dans les données d'image, et

la modification (73, 74, 81, 82, 83, 84) des données de coordonnées en trois dimensions en décalant des coordonnées ou en ajoutant (73, 84) des coordonnées de points en fonction des caractéristiques de bord détectées, et

l'attribution (53) de données provenant des données d'image, en particulier des données de luminance et/ou des données de couleur, auxdites données de coordonnées modifiées ou à des données dérivées de celles-ci.

2. Méthode selon la revendication 1, **caractérisée en ce qu'**une erreur de parallaxe est compensée par la conversion des coordonnées.

3. Méthode selon une ou plusieurs des revendications 1 ou 2, **caractérisée en ce que** les informations de bord sont extraites des données d'image, les données de coordonnées sont modifiées en fonction desdites informations de bord, en particulier en décalant des coordonnées ou en ajoutant des coordonnées de points en fonction desdites informations de bord.

4. Méthode selon une ou plusieurs des revendications précédentes, **caractérisée en ce que** les données d'image sont modifiées, des données de coordonnées sont modifiées en fonction des informations provenant des données d'image modifiées, et des données provenant des données d'image modifiées sont attribuées auxdites données de coordonnées modifiées ou à des données dérivées de celles-ci.

5. Méthode selon la revendication 4, **caractérisée en ce que** des régions dans les données d'image sont modifiées en remplaçant les données d'image dans ladite région d'image, des données de coordonnées correspondant aux régions modifiées de l'image sont modifiées, et des données provenant des données d'image modifiées sont attribuées auxdites données de coordonnées modifiées.

6. Méthode selon une ou plusieurs des revendications précédentes, **caractérisée en ce que** l'image est prise avec un appareil photo numérique.

7. Méthode selon une ou plusieurs des revendications précédentes, **caractérisée en ce que** les coordonnées sont prises avec un scanner laser.

8. Méthode selon une ou plusieurs des revendications précédentes, **caractérisée en ce que** la prise de l'image et la prise des coordonnées sont effectuées par différents systèmes optiques ou à des vitesses d'obturation différentes.

9. Méthode selon une ou plusieurs des revendications précédentes, **caractérisée en ce que** l'attribution de données d'image à des données de coordonnées ou à des données dérivées de celles-ci comprend l'attribution aux coordonnées d'un point de surface des valeurs de luminance et/ou de couleur de scène trouvées dans l'image dans une position correspondant aux coordonnées.

10. Méthode selon la revendication 9, **caractérisée en ce que** les erreurs de projection sont compensées.

11. Méthode selon la revendication 10, **caractérisée en ce que** la compensation est effectuée en fonction des valeurs de correction obtenues en prenant l'image d'une image test connue.

12. Méthode d'affichage d'une image d'une scène réelle en trois dimensions sur un écran, comprenant les étapes :

de saisie de l'image de la scène en trois dimensions avec une méthode selon une ou plusieurs des revendications précédentes,

d'affichage de l'image de la scène en référence aux données de coordonnées ou à des données dérivées de celles-ci, et en référence aux données d'image attribuées.

13. Méthode selon la revendication 12, **caractérisée en ce que** l'affichage de l'image de la scène comprend la projection des données d'image en trois dimensions ou des données dérivées de celles-ci sur un plan pouvant être sélectionné et la coloration de l'image affichée en fonction de données d'image attribuées de manière respective.

**14.** Dispositif pour saisir une image d'une scène en trois dimensions, comprenant :

un moyen (21) pour prendre une image en deux dimensions (2) de la scène et stocker les données d'image (24), et un moyen (22) pour prendre des coordonnées en trois dimensions d'une pluralité de points (P1 ..., Pn, ...) sur la surface de la scène et stocker les données de coordonnées (25), **caractérisé par** un moyen (23) pour détecter des caractéristiques de bord dans les données d'image et pour modifier les données de coordonnées en décalant des coordonnées ou en ajoutant des coordonnées de points en fonction des caractéristiques de bord détectées, et pour attribuer des données à partir des données d'image, en particulier des données de luminance et/ou des données de couleur, auxdites données de coordonnées modifiées ou à des données dérivées de celles-ci.

**15.** Dispositif selon la revendication 14, **caractérisé en ce que** le moyen de prise d'image (21) est un appareil photo numérique et le moyen de prise de coordonnées (22) est un scanner.

**16.** Dispositif selon la revendication 14 ou 15, **caractérisé en ce que** le moyen de prise d'image (21) et le moyen de prise de coordonnées (22) ont des chemins optiques différents.

**17.** Dispositif selon une ou plusieurs des revendications 14 à 16, **caractérisé en ce qu'**il comprend un moyen pour enregistrer le moyen de prise d'image (21) et le moyen de prise de coordonnées (22).

**18.** Dispositif selon la revendication 17, **caractérisé en ce que** le moyen d'enregistrement (21) comprend un moyen mécanique.

**19.** Dispositif selon la revendication 17 ou 18, **caractérisé en ce que** le moyen d'enregistrement (21) comprend un moyen de traitement de données.

**20.** Dispositif selon une ou plusieurs des revendications 14 à 19, **caractérisé en ce qu'**il comprend un premier moyen d'obturation pour le moyen de prise d'image (21) et un second moyen d'obturation pour le moyen de prise de coordonnées (22).

**21.** Dispositif selon une ou plusieurs des revendications 14 à 20, **caractérisé en ce qu'**il comprend des données (28) pour corriger les distorsions de projection des données de coordonnées (25).

**22.** Dispositif selon une ou plusieurs des revendications 14 à 21, **caractérisé en ce qu'**il comprend un moyen pour modifier le champ de vision du moyen de prise d'image (21) et du moyen de prise de coordonnées (22).

**23.** Dispositif selon une ou plusieurs des revendications 14 à 22, **caractérisé en ce que** le dispositif est conçu pour exécuter la méthode selon l'une quelconque des revendications 1 à 13.

Fig. 1

Fig. 2

## Fig. 3

25

| | xs | ys | zs | |
|---|---|---|---|---|
| P1 | 125,22 | 32,77 | 2,03 | |
| P2 | 125,20 | 32,75 | 2,07 | |
| P3 | 125,21 | 32,76 | 2,10 | |
| P4 | 125,22 | 32,76 | 2,14 | |
| P5 | 125,21 | 32,77 | 2,17 | |
| P6 | 125,12 | 32,65 | 2,21 | |
| P7 | 125,13 | 32,65 | 2,24 | |
| P8 | 125,12 | 32,67 | 2,28 | |
| P9 | 125,12 | 32,66 | 2,31 | |
| P10 | | | 2,35 | |

## Fig. 4

26

| | xs | ys | zs | I (R, G, B) | |
|---|---|---|---|---|---|
| P1 | 125,22 | 32,77 | 2,03 | 7, 5, 11 | |
| P2 | 125,20 | 32,75 | 2,07 | 7, 4, 12 | |
| P3 | 125,21 | 32,76 | 2,10 | 8, 5, 13 | |
| P4 | 125,22 | 32,76 | 2,14 | 8, 4, 11 | |
| P5 | 125,21 | 32,77 | 2,17 | 7, 5, 12 | |
| P6 | 125,12 | 32,65 | 2,21 | 31, 45, 16 | |
| P7 | 125,13 | 32,65 | 2,24 | 32, 44, 16 | |
| P8 | 125,12 | 32,67 | 2,28 | 31, 44, 15 | |
| P9 | 125,12 | 32,66 | 2,31 | 31, 45, 15 | |
| P10 | 125,12 | | 2,35 | 32, 45, 16 | |

# Fig. 5

50 — Start

51 — Determine image coordinate xi, yi
for 3D-coordinate xs, ys, zs

52 — Retrieve image data I(xi, yi)

53 — Allocate I(xi, yi) to xs, ys, zs

54 — End

# Fig. 6

6  7  8  3  4

P7

P6

Pnf

Pins

P5

P4

P3

P0

Vg

G0

E0   Vel   Ve2

0/0/0

## Fig. 7

70 — Start

71 — Extract feature F2d from 2D image
E.g. a line: F2d: yi = a*xi + b

72 — Determine 3D feature expression in correct context
E.g. for a line: $G = G_0 + \gamma * V_g$

73 — Add 3D points in accordance with 3D expression

74 — Delete points in accordance with
F2d and context

75 — End

## Fig. 8

80 — Start

81 — Modify image region Imod

82 — Find 3D points Pmi corresponding to Imod

83 — Delete Pmi

84 — Add points in accordance with context

85 — End

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4222642 A1

**Non-patent literature cited in the description**

- The Mapping of Texture on VR Polygonal Models. **D. LAURENDEAU et al.** Proceedings of the Second International Conference on 3D Digital Imaging and Modeling in Ottawa. IEEE Computing Society, 04 October 1999, 332-339

- Digital Archiving of an Archaeological Excavation Site for Multimedia Display. **JIANG YU ZHENG et al.** Proceedings of the 14th International Conference on Pattern Recognition. IEEE, 1998